(19) **Europäisches Patentamt European Patent Office Office européen des brevets**

(11) **EP 4 667 532 A1**

(12) **EUROPEAN PATENT APPLICATION**
published in accordance with Art. 153(4) EPC

(43) Date of publication:
**24.12.2025 Bulletin 2025/52**

(21) Application number: **24901761.7**

(22) Date of filing: **11.12.2024**

(51) International Patent Classification (IPC):
$C08L\ 77/00\ ^{(2006.01)}$   $C08L\ 77/02\ ^{(2006.01)}$
$C08L\ 77/06\ ^{(2006.01)}$   $C08L\ 71/00\ ^{(2006.01)}$
$C08K\ 7/14\ ^{(2006.01)}$   $C08K\ 5/053\ ^{(2006.01)}$

(86) International application number:
**PCT/KR2024/096662**

(87) International publication number:
**WO 2025/230088 (06.11.2025 Gazette 2025/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.05.2024 KR 20240058654**

(71) Applicant: **LG Chem, Ltd.**
**Seoul 07336 (KR)**

(72) Inventors:
• **KIM, Kyuyoung**
  **Daejeon 34122 (KR)**
• **KIM, Hong Jin**
  **Daejeon 34122 (KR)**
• **LIM, Mok Keun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYAMIDE RESIN COMPOSITION, PREPARATION METHOD THEREFOR, AND MOLDED PRODUCT COMPRISING SAME**

(57)  The present invention relates to a polyamide resin composition, a method of preparing the same, and a molded article including the same.

According to the present invention, the present invention has an effect of providing a polyamide resin composition having excellent tensile strength and flexural modulus, being capable of minimizing the effect of heat due to exposure to external environments due to excellent heat resistance thereof, and being suitable for automotive or electrical/electronic products used in environments where the usage temperature exceeds 150 °C or automotive or electrical/electronic products requiring a heat resistance of 200 °C or higher, a method of preparing the same, and a molded article including the same.

**Description**

[Technical Field]

[Cross-Reference to Related Application]

This application claims priority to Korean Patent Application No. 10-2024-0058654, filed on May 2, 2024, in the Korean Intellectual Property Office, the disclosure of which is incorporated herein by reference.

The present invention relates to a polyamide resin composition, a method of preparing the same, and a molded article including the same. More particularly, the present invention relates to a polyamide resin composition having excellent tensile strength and flexural modulus, being capable of minimizing the effect of heat due to exposure to external environments due to excellent heat resistance thereof, and being suitable for automotive or electrical/electronic products used in environments where the usage temperature exceeds 150 °C or automotive or electrical/electronic products requiring a heat resistance of 200 °C or higher, a method of preparing the same, and a molded article including the same.

[Background Art]

Recently, many studies have been conducted to improve the fuel efficiency of automobiles by manufacturing automobile parts using resins, and polyamide resin, which has excellent heat resistance and solvent resistance, is widely used as a material for automobile parts.

However, the polyamide resin is difficult to apply to automotive parts or electrical and electronic parts that require heat resistance of over 200 °C due to the insufficient heat resistance thereof.

Meanwhile, representative heat-resistant stabilizers that provide heat resistance to the polyamide resin include polyhydric alcohols such as pentaerythritol, dipentaerythritol, and tripentaerythritol.

However, while these ingredients provide high heat stability, the ingredients have the disadvantage of causing a whitening phenomenon that causes the product surface to turn white by migration under high-temperature and high-humidity environments.

Therefore, there is an urgent need to develop a polyamide resin composition that has excellent tensile strength, flexural modulus, and heat resistance, does not cause whitening, and can be applied to automobile parts or electrical and electronic parts.

[Related Art Documents]

[Patent Documents]

Japanese Patent Application Publication 2014-148560

[Disclosure]

[Technical Problem]

Therefore, the present invention has been made in view of the above problems, and it is one object of the present invention to provide a polyamide resin composition having excellent tensile strength and flexural modulus, being capable of minimizing the effect of heat due to exposure to external environments due to excellent heat resistance thereof, and being a suitable material as a replacement for metal parts of automobiles or electrical and electronic devices used in high-temperature environments, a method of preparing the same, and a molded article including the same.

The above and other objects can be accomplished by the present invention described below.

[Technical Solution]

I) In accordance with one aspect of the present invention, provided is a polyamide resin composition including a polyamide resin (A), glass fiber (B), and an ether compound (C), wherein the ether compound (C) includes an ether compound (C-1) having an OH value of 35 to 40 mgKOH/g; and an ether compound (C-2) having an OH value of 1190 to 1320 mgKOH/g.

II) In accordance with another aspect of the present invention, provided is a polyamide resin composition including 39 to 95 % by weight of a polyamide resin (A), 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 5 % by weight or less of additives (D).

III) According to I) to II), the ether compound (C-1) may have a number average molecular weight of 20,000 g/mol or less.

IV) According to I) to III), the ether compound (C-2) may have a number average molecular weight of 2,000 g/mol or less.

V) According to I) to IV), the ether compound (C-1) and the ether compound (C-2) may be included in a weight ratio (C-1:C-2) of 1:0.5 to 1:5.

VI) According to I) to V), the glass fiber may include 52 to 56 % by weight of silica, 12 to 16 % by weight of alumina, 21 to 25 % by weight of calcium oxide and magnesia (magnesia: 1.5 % by weight or less), 1 % by weight or less of titanium dioxide, 5 to 8 % by weight of boron oxide, and less than 2.0 % by weight of a remainder including sodium oxide, potassium oxide, and iron oxide.

VII) According to I) to VI), the additives may include one or more selected from a heat stabilizer, a light stabilizer, a lubricant, and an antioxidant.

VIII) According to I) to VII), the polyamide resin composition may have a tensile strength of 170 MPa or more as measured at a marking distance of 50 mm, a test speed of 5.0 mm/min, and a temperature of 23 °C according to ISO 527.

IX) According to I) to VIII), the polyamide resin composition may have a flexural modulus of 8,000 MPa or more as measured at a span of 64 mm and a test speed of 2.0 mm/min according to ISO 178.

X) In accordance with still another aspect of the present invention, provided is a method of preparing a polyamide resin composition, the method including kneading and extruding a polyamide resin (A), glass fiber (B), and an ether compound (C), wherein the ether compound (C) includes an ether compound (C-1) having an OH value of 35 to 40 mgKOH/g; and an ether compound (C-2) having an OH value of 1190 to 1320 mgKOH/g.

XI) In accordance with still another aspect of the present invention, provided is a method of preparing a polyamide resin composition, the method including kneading and extruding 39 to 89.4 % by weight of a polyamide resin (A), 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 0 to 5 % by weight of additives.

XII) According to X) to XI), the extrusion conditions may be temperature conditions of 280 to 310 °C.

XIII) In accordance with yet another aspect of the present invention, provided is a molded article including the above-described polyamide resin composition.

XIV) According to XIII), the molded article may be an automotive part or an electrical and electronic part.

[Advantageous Effects]

According to the present invention, the present invention has an effect of providing a polyamide resin composition having excellent tensile strength and flexural modulus, being capable of minimizing the effect of heat due to exposure to external environments due to excellent heat resistance thereof, and being suitable for automotive or electrical/electronic products used in environments where the usage temperature exceeds 150 °C or automotive or electrical/electronic products requiring heat resistance of 200 °C or higher, a method of preparing the same, and a molded article including the same.

[Best Mode]

Hereinafter, a polyamide resin composition of the present invention, a method of preparing the same, and a molded article including the same will be described in detail.

The present inventors confirmed that, when a polyamide resin composition was prepared by mixing a polyamide resin, glass fiber, and ether compounds satisfying a specific OH value at a predetermined composition ratio, a molded article including the polyamide resin composition had excellent tensile strength, flexural modulus, and heat resistance and was hardly affected by heat due to exposure to external environments. Based on these results, the present inventors conducted further studies to complete the present invention.

The polyamide resin composition of the present invention includes a polyamide resin, glass fiber, and two types of ether compounds having different OH values. In this case, tensile strength and flexural modulus may be excellent, and the effect of heat due to exposure to external environments may be minimized due to excellent heat resistance. Accordingly, the polyamide resin composition may be useful in automotive or electrical/electronic products used in environments where the usage temperature exceeds 150 °C or automotive or electrical/electronic products requiring heat resistance of 200 °C or higher.

As another example, the polyamide resin composition of the present invention includes a polyamide resin (A), glass fiber (B), and an ether compound (C). The ether compound (C) includes an ether compound (C-1) having an OH value of 35 to 40 mgKOH/g; and an ether compound (C-2) having an OH value of 1190 to 1320 mgKOH/g. In this case, tensile strength and flexural modulus may be excellent, and the effect of heat due to exposure to external environments may be minimized due to excellent heat resistance. Accordingly, the polyamide resin composition may be useful in automotive or electrical/electronic products used in the environment where the usage temperature exceeds 150 °C and automotive or electrical/electronic products requiring a heat resistance of 200 °C or higher.

As another example, the polyamide resin composition of the present invention includes 39 to 89.4 % by weight of a polyamide resin, 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 5 % by weight or less of additives (D). In this case, tensile strength and flexural modulus may be excellent, and the effect of heat due to exposure to external environments may be minimized due to excellent heat resistance. Accordingly, the polyamide resin composition may be useful in automotive or electrical/electronic products used in the environment where the usage temperature exceeds 150 °C and automotive or electrical/electronic products requiring a heat resistance of 200 °C or higher.

Hereinafter, each component that constitutes the polyamide resin composition of the present invention is described in detail.

### (A) Polyamide resin

For example, the polyamide of the present invention may include one or more selected from polyamide 6, polyamide 66, polyamide 46, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I, and polyamide 66/12/6I, more preferably a homopolymer or copolymer including one or more selected from polyamide 6, polyamide 66, polyamide 46, polyamide 11, and polyamide 12, most preferably polyamide 66. In this case, heat resistance, moldability, and chemical resistance may be excellent.

Based on 100 % by weight in total of the polyamide resin composition, the polyamide may be included in an amount of preferably 59 % by weight or more, more preferably 39 to 89.4 % by weight, still more preferably 59 to 63 % by weight. Within this range, mechanical properties, such as tensile strength and impact strength, and heat resistance may be excellent.

The polyamide may be prepared by a method commonly used in the technical field to which the present invention belongs, or a commercially available product may be used, within the scope that complies with the definition of the present invention, without particular limitation.

### (B) Glass fiber

In the present disclosure, to increase the mechanical properties, heat resistance, and dimensional stability of the polyamide resin composition, glass fiber is included.

When the glass fiber is included in the polyamide resin composition, the mechanical properties, such as tensile strength, impact strength, and elongation, and heat resistance of a molded article formed from the resin composition may be improved.

To secure the fluidity of the resin composition required in the field of molding parts using the polyamide resin composition, a specific glass material among glass fibers is introduced. For example, when glass fiber, described later, is used in the field of replacing metal materials in automobile system modules, sufficient heat resistance and mechanical properties of the base resin may be maintained while sufficient processability and moldability may be secured.

The glass fiber may be selected from at least one of a first glass fiber having a tensile modulus of 83 to 87 GPa as measured by ASTM D2343 for a 17 $\mu$m -2400 text roving strand and a second glass fiber having a tensile modulus of 88 to 92 GPa. In the case of using such high-strength glass fiber, surface appearance defects due to glass fiber protrusion or gas flow traces during injection molding may be reduced. In addition, productization may be attempted by considering the property deviation according to the orientation of glass fiber in each part, and it is advantageous in terms of flatness and deformation.

For example, the cross-section of the glass fiber may be circular or non-circular, or may be flat, including non-circular types such as oval or irregular.

In the present disclosure, the circular, elliptical, and irregular shapes of the cross-section are not specifically limited when the circular, elliptical, and irregular shapes are circular, elliptical, and irregular shapes commonly recognized in the technical field to which the present invention belongs.

In the present disclosure, the circular shape refers to a case where the cross-section is circular and the dimension ratio of the primary cross-sectional axis to the secondary cross-sectional axis is close to 1, or is 1, but is not limited thereto.

In the present disclosure, the elliptical shape refers to a case where the cross-section is elliptical and the dimension ratio of the primary cross-sectional axis to the secondary cross-sectional axis is 2:6, 3:6, or 3.5:5.0, but is not limited thereto.

In the present disclosure, the amorphous shape refers to, but is not limited to, a case where the cross-section is not circular or oval.

In the present disclosure, the glass fiber may be used in combination with other inorganic fibers. For example, the inorganic fibers may include one or more selected from carbon fiber, basalt fiber, and natural fiber such as kenaf or hemp.

The glass fiber of the present invention may be a glass fiber of circular or non-circular cross-section with a silica content of 52 % by weight or more, or 52 to 66 % by weight. In this case, when product design and design change are considered simultaneously, high strength, lightweight, and appearance quality that may replace existing metals may be secured.

For example, when measuring an aspect ratio expressed as the ratio (L/D) of length (L) to diameter (D), when the glass fiber has an aspect ratio of 1:1 to 1:4, as a specific example, 1:1 to 1:3, more specifically, 1:1, the polyamide resin composition of the present invention may provide high strength, high toughness, and improved elongation and surface appearance quality. When the aspect ratio is 1:3 to 1:4, more specifically, 1:4, a product having high strength and high toughness and being suitable in terms of flatness, deformation, and orientation may be provided.

In the present disclosure, diameter and length may be measured using a scanning electron microscope (SEM). Specifically, 20 inorganic fillers are selected using a scanning electron microscope, the diameter and length of each inorganic filler are measured using an icon bar capable of measuring diameter, and then the average diameter and average length are calculated.

For example, the D may have an average diameter of 6 to 16 $\mu$m, preferably 7 to 11 $\mu$m, more preferably 10 to 11 $\mu$m. Within this range, processability may be improved, and the tensile strength of a molded article manufactured by molding the polyamide resin composition of the present invention may be improved.

In the present disclosure, the glass fiber may include 58 to 62 % by weight of silica, 14 to 18 % by weight of alumina, 17 to 24 % by weight of calcium oxide and magnesia (calcium oxide: 10 % by weight or more, magnesia: 10 % by weight or less), 0.5 to 2 % by weight of titanium dioxide, and 1.3 % by weight or less of a remainder including sodium oxide, potassium oxide, and iron oxide. In this case, a polyamide resin composition having excellent physical property balance between processability, specific gravity, and mechanical properties may be secured. In addition, using the polyamide resin composition, a molded article having high strength and high toughness that may replace metals may be provided.

The glass fiber may include 52 to 56 % by weight of silica, 12 to 16 % by weight of alumina, 21 to 25 % by weight of calcium oxide and magnesia (magnesia: 1.5 % by weight or less, magnesia: 1.5 % by weight or less), 1 % by weight or less of titanium dioxide, 5 to 8 % by weight of boron oxide, and less than 2.0 % of a remainder including sodium oxide, potassium oxide, and iron oxide. In this case, a polyamide resin composition having excellent physical property balance between processability, specific gravity, and mechanical properties may be secured. In addition, using the polyamide resin composition, a molded article having high strength and high toughness that may replace metals may be provided.

The glass fiber may be a circular glass fiber having a circular cross-section with a total amount of calcium oxide and magnesium of 17 to 24 % by weight. In this case, a polyamide resin composition having excellent physical property balance between processability, specific gravity, and mechanical properties may be secured. In addition, using the polyamide resin composition, a molded article having high strength and high toughness that may replace metals may be provided.

The glass fiber may be a flat glass fiber having a non-circular cross-section with a total amount of calcium oxide and magnesium of 21 to 25 % by weight. In this case, a polyamide resin composition having excellent physical property balance between processability, specific gravity, and mechanical properties may be secured. In addition, using the polyamide resin composition, a molded article having high strength and high toughness that may replace metals may be provided.

As a specific example, the glass fiber may be represented by the general formula AaBbCcDd.

For the ultra-high strength grade, the characteristics of $0.5 \leq c \leq 5$ are shown. For another general purpose grade, the characteristics of $20 \leq c \leq 24$, $2 \leq d \leq 5$, and $22 \leq c+d \leq 29$ in the general formula are shown, confirming that the compositions are different.

Contrary to what is known in the art, it was confirmed through examples described below that it is preferable to use a circular cross-section high-strength grade or a non-circular (flat) high-strength flat grade rather than an ultra-high-strength grade in the polyamide resin composition of the present invention to improve tensile strength and injection moldability.

In the present disclosure, during fiber manufacturing or post-processing, the glass fiber may be treated with glass fiber treatment agents (sizing compositions), and the glass fiber treatment agents include lubricants, coupling agents, surfactants, etc.

The lubricant is mainly used to form a good strand when manufacturing glass fiber, and the coupling agent plays a role in enabling good adhesion between glass fiber and a polyamide resin. When the types of polyamide resin and glass fiber are properly selected, excellent physical properties may be imparted to a polyamide resin composition reinforced with glass fibers.

The coupling agent may be applied directly to glass fiber or added to an organic matrix. To sufficiently exhibit the performance of the coupling agent, the content thereof may be appropriately selected.

Examples of the coupling agent include amine-based coupling agents, acrylic coupling agents, γ-aminopropyl triethoxysilane, γ-aminopropyl trimethoxysilane, N-(beta-aminoethyl) γ-aminopropyl triethoxysilane, γ-methacryloxypropyl triethoxysilane, and γ-glycidoxypropyl trimethoxysilane.

As a specific example, the glass fiber may include 58 to 62 % by weight of silica, 14 to 18 % by weight of alumina, 17 to 24 % by weight of calcium oxide and magnesia (calcium oxide: 10 % by weight or more, magnesia: 10 % by weight or less), 0.5 to 2 % by weight of titanium dioxide, and 1.3 % by weight or less of a remainder including sodium oxide, potassium oxide, and iron oxide. When measuring an aspect ratio (L/D) expressed as the ratio of length (L) to diameter (D), the glass fiber has an aspect ratio (L/D) of 1:1. Circular high-strength glass fibers with a diameter of 6 to 16 μm may be used.

As a specific example, the glass fiber may include 52 to 56 % by weight of silica, 12 to 16 % by weight of alumina, 21 to 25 % by weight of calcium oxide and magnesia (magnesia: 1.5 % by weight or less), 1 % by weight or less of titanium dioxide, 5 to 8 % by weight of boron oxide, and less than 2.0 % of a remainder including sodium oxide, potassium oxide, and iron oxide. When measuring an aspect ratio (L/D) expressed as the ratio of length (L) to diameter (D), the glass fiber has an aspect ratio (L/D) of greater than 1:1 and 1:4 or less. Non-circular high-strength flat glass fibers with a diameter of 6 to 16 μm may be used.

Based on 100 % by weight in total of the polyamide resin composition, the glass fiber may be included in an amount of preferably 30 % by weight or more, more preferably 4.4 to 40 % by weight, still more preferably 33 to 38 % by weight. Within this range, when product design and design changes are simultaneously considered, high strength and appearance quality that may replace existing metals may be secured.

The glass fiber may be prepared by a method commonly used in the technical field to which the present invention belongs, or a commercially available product may be used, within the scope that complies with the definition of the present invention, without particular limitation.

## (C) Ether compound

To prevent whitening phenomenon while implementing heat resistance at high temperatures above 200 °C, i.e., to provide heat stability, the ether compound of the present invention is added to the polyamide resin.

The ether compound of the present invention may include an ether compound (C-1) having an OH value of 35 to 40 mgKOH/g; and an ether compound (C-2) having an OH value of 1190 to 1320 mgKOH/g.

For example, the ether compound (C-1) having an OH value of 35 to 40 mgKOH/g; and the ether compound (C-2) having an OH value of 1190 to 1320 mgKOH/g may be included in a weight ratio (C-1:C-2) of 1:0.5 to 1:3, preferably 1:0.7 to 1:2.5, more preferably 1:1 to 1:2. In this case, mechanical properties, such as tensile strength and impact strength, and heat resistance may be excellent.

## (C-1) Ether compound

The ether compound having an OH value of 35 to 40 mgKOH/g may be included to impart improved surface appearance along with the aforementioned heat stability.

The OH value may be measured using standard methods such as ASTM D4274, ASTM D1899, ASTM D1957, and ASTM D6321.

When the ether compound has a hydroxyl group exceeding 40 mgKOH/g, the ether compound cannot sufficiently penetrate to the surface, and thus the whitening phenomenon cannot be improved in small quantities. Thus, the hydroxyl group may be included in a range of, for example, 40 mgKOH/g or less, as a specific example, 35 to 40 mgKOH/g. In this case, the thermal bonding strength between the components constituting the polyamide resin composition may be improved.

Based on 100 % by weight in total of the polyamide resin composition, the ether compound may be included in an amount of preferably 0.5 to 10 % by weight, more preferably 0.4 to 2.44 % by weight, still more preferably 0.5 to 2.4 % by weight, still more preferably 0.8 to 2.2 % by weight. In this case, kneading and molding may be easily performed with only a small amount of addition. In addition, tensile strength, flexural modulus, and heat resistance may be significantly improved without deteriorating the original mechanical properties of polyamide resin.

For example, the ether compound having an OH value of 35 to 40 mgKOH/g may be poly(tetramethylene ether) glycol.

The ether compound having an OH value of 35 to 40 mgKOH/g may be prepared by a method commonly used in the technical field to which the present invention belongs, or a commercially available product may be used, within the scope that complies with the definition of the present invention, without particular limitation. For example, PTMG3000, PTMG2000, PTMG2000, or the like may be used.

#### (C-2)Ether compound

The ether compound having an OH value of 1190 to 1320 mgKOH/g may be included to impart heat resistance and improved surface appearance to the polyamide resin composition in combination with the aforementioned ether compound (C-1). In this case, the thermal bonding strength between the components constituting the polyamide resin composition may be sufficiently improved.

Based on 100 % by weight in total of the polyamide resin composition, the ether compound having an OH value of 1190 to 1320 mgKOH/g may be included in an amount of preferably 0.1 to 10 % by weight, more preferably 0.1 to 5 % by weight, still more preferably 1 to 5 % by weight, still more preferably 1 to 3 % by weight. In this case, kneading and molding may be easily performed with only a small amount of addition. In addition, tensile strength, flexural modulus, and heat resistance may be significantly improved without deteriorating the original mechanical properties of polyamide resin.

The ether compound having an OH value of 1190 to 1320 mgKOH/g may be prepared by a method commonly used in the technical field to which the present invention belongs, or a commercially available product may be used, within the scope that complies with the definition of the present invention, without particular limitation.

For example, the ether compound having an OH value of 1190 to 1320 mgKOH/g may be dipentaerythritol.

#### (D) Additives

The additives of the present invention may include one or more selected from a lubricant, an antioxidant, a heat stabilizer, and a light stabilizer. In this case, the required properties may be efficiently implemented without deteriorating the original properties of the polyamide resin composition of the present invention.

For example, the lubricant may include one or more selected from an alkyl acrylate polymer, a styrene-acrylonitrile copolymer having a weight average molecular weight of 30,000 to 70,000 g/mol, an ethylene copolymer, olefin wax, and an aliphatic amide compound, preferably one or more selected from an alkyl acrylate polymer, a styrene-acrylonitrile copolymer having a weight average molecular weight of 30,000 to 70,000 g/mol, and olefin wax, more preferably an alkyl acrylate polymer. In this case, appearance quality may be excellent due to excellent physical property balance and scratch resistance.

For example, based on 100 % by weight in total of the polyamide resin composition, the lubricant may be included in an amount of 5 % by weight or less, preferably 0.1 to 5 % by weight. Within this range, both releasability and fluidity may be excellent.

The alkyl acrylate polymer may include preferably one or more selected from the group consisting of poly(methyl acrylate), poly(ethyl acrylate), and poly(butyl acrylate). In this case, the formation of mold deposits may be suppressed, so that the appearance of the molded article may be attractive and high gloss may be achieved.

As the alkyl acrylate polymer, an alkyl acrylate polymer that follows the definition of the present invention may be prepared directly or a commercially available product may be used, without particular limitation.

The styrene-acrylonitrile copolymer having a weight average molecular weight of 30,000 to 70,000 g/mol may have a weight average molecular weight of preferably 40,000 to 67,000 g/mol, more preferably 50,000 to 65,000 g/mol, still more preferably 55,000 to 65,000 g/mol. Within this range, fluidity may be improved, processability may be excellent, and appearance quality may be improved.

For example, the styrene-acrylonitrile copolymer having a weight average molecular weight of 30,000 to 70,000 g/mol may have a melt flow index (190 °C, 5 kg) of 20 to 60 g/10min, preferably 25 to 55 g/10min as measured according to ISO 1133. Within this range, impact strength, fluidity, and appearance quality may be excellent.

For example, the styrene-acrylonitrile copolymer having a weight average molecular weight of 30,000 to 70,000 g/mol may have a heat distortion temperature of 82 to 90 °C, preferably 84 to 88 °C as measured according to ASTM D648. Within this range, impact strength, fluidity, and appearance quality may be excellent.

For example, the ethylene copolymer may include one or more selected from an ethylene/1-butene copolymer and an ethylene/n-butyl acrylate/carbon monoxide terpolymer. In this case, heat resistance, fluidity, and appearance quality may be excellent.

For example, the olefin wax may include one or more selected from the group consisting of polyethylene wax and polypropylene wax, preferably polyethylene wax. In this case, heat resistance, fluidity, and appearance quality may be excellent.

For example, the aliphatic amide compound may include one or more selected from the group consisting of stearamide, behanamide, ethylene bis(stearamide), N,N'-ethylene bis(12-hydroxy stearamide), erucamide, oleamide, and ethylene bis oleamide, preferably ethylene bis (stearamide). In this case, impact strength, fluidity, and appearance quality may be excellent.

For example, the antioxidant may include one or more selected from copper compounds and potassium compounds. In this case, heat resistance retention and discoloration resistance may be excellent.

For example, the copper compounds may include CuI, and the potassium compounds may include one or more selected from the group consisting of KI and KBr.

For example, based on 100 % by weight in total of the polyamide resin composition, the antioxidant may be included in an amount of 5 % by weight or less, preferably 0.1 to 5 % by weight. Within this range, by reducing the thermal history of polymer materials during thermal forming processes such as extrusion and injection molding, the physical property retention rate may be improved, and discoloration resistance may be excellent.

For example, the heat stabilizer may include one or more selected from the group consisting of a phenolic heat stabilizer, a phosphite heat stabilizer, and a thioether heat stabilizer, preferably a phenolic heat stabilizer or a phosphite heat stabilizer.

For example, based on 100 % by weight in total of the polyamide resin composition, the heat stabilizer may be included in an amount of 0.1 to 2.5 % by weight, preferably 0.3 to 1.5 % by weight, more preferably 0.3 to 1 % by weight. In this case, heat resistance may be improved.

For example, the phenolic heat stabilizer may include one or more selected from the group consisting of tetrakis methylene 3-(3,5-di-tert-butyl-4-hydroxyphenyl)propionate methane, 1,3,5-tris-(4-t-butyl-3-hydroxy-2,6-dimethyl benzyl)-1,3,5-triazine-2,4,6-(1H,3H,5H)-trione, and 1,3,5-tris-(3,5-di-t-butyl-4-hydroxybenzyl)-s-triazine-2,4,6-(1H,3H,5H)-trione.

For example, the phosphite heat stabilizer may be trisnonylphenyl phosphite, tris-(2,4-di-tert-butylphenyl) phosphite, bis(2,4-di-tert-butylphenyl)pentaerythritol diphosphite, or a mixture thereof.

For example, the thioether heat stabilizer may include one or more selected from the group consisting of dilauryl thiodipropionate, dimyristyl thiodipropionate, lauryl stearyl thiodipropionate, distearyl thiodipropionate, dimethyl thiodipropionate, 2-mercaptobenzimidazole, phenothiazine, octadecyl thioglycolate, butyl thioglycolate, octyl thioglycolate, and thiocresol.

For example, based on 100 % by weight in total of the polyamide resin composition, the light stabilizer may be included in an amount of 0.1 to 2.5 % by weight, preferably 0.3 to 1.5 % by weight, more preferably 0.3 to 1 % by weight. In this case, weather resistance may be improved.

For example, the light stabilizer may be a hindered amine light stabilizer (HALS), preferably may include one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzilmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, and a reaction product of 7,7,9,9-tetramethyl-2-cycloundecyl-1-oxa-3,8-diaza-4-oxospiro-[4,5]decane and epichlorohydrin, and poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], more preferably bis(2,2,6,6-tetramethyl-4-piperidyl) sebacate, 2-(2H-benzotriazol-2-yl)-4-(1,1,3,3-tetramethylbutyl)phenol, poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, still more preferably bis(2,2,6,6-tetramethyl-4-piperidyl) sebacate, poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, In this case, weather resistance may be significantly improved without deteriorating impact strength and fluidity.

When the heat stabilizer and light stabilizer are included, heat resistance may be further improved by the synergistic effect of the combination thereof.

When necessary, based on 100 % by weight in total of the polyamide resin composition, thermoplastic resin composition may further include one or more selected from the group consisting of flame retardants, hydrolytic stabilizers, dyes, pigments, colorants, antistatic agents, crosslinkers, antimicrobial agents, processing aids, and carbon black masterbatches in an amount of 0.1 to 2.5 % by weight, preferably 0.3 to 1.5 % by weight, more preferably 0.3 to 1 % by weight. Within this range, the required properties may be effectively implemented without deteriorating the inherent properties of the thermoplastic resin composition of the present invention.

## Polyamide resin composition

When an ISO flexure specimen manufactured under temperature conditions of 280 to 310 °C is aged for 4 weeks under high temperature and humidity of 70 °C and 62 RH%, and whitening is observed on the surface of the specimen, the polyamide resin composition of the present invention exhibits whitening-free characteristics.

Here, whitening refers to the phenomenon of migration occurring on the surface of the product when the product is left in a high temperature and humidity environment of 70 °C and 62 RH% for a long period of time, resulting in white spots being observed on the surface. According to the present invention, the whitening phenomenon is not observed, the physical property balance may be excellent, the heat resistance may be excellent, and the surface quality and expected lifespan may be improved.

For example, the polyamide resin composition may have a test speed of 5.0 mm/min as measured at a marking distance of 50 mm and a tensile strength of 170 MPa or more, more preferably 180 MPa or more, still more preferably 190 to 220 MPa as measured at 23 °C according to ISO 527. Within this range, physical property balance, heat resistance, rigidity, and impact resistance may be excellent.

For example, the polyamide resin composition may have a flexural modulus of 8,000 MPa or more, more preferably 8,500 MPa or more, still more preferably 8,900 to 9,500 MPa as measured at a span of 64 mm and a test speed of 2.0 mm/min according to ISO 178. Within this range, physical property balance, heat resistance, rigidity, and impact resistance may be excellent.

## Method of preparing polyamide resin composition

For example, the method of preparing the polyamide resin composition of the present invention includes a step of kneading and extruding a polyamide resin (A), glass fiber (B), and an ether compound (C), wherein the ether compound (C) includes an ether compound (C-1) having an OH value of 35 to 40 mgKOH/g; and an ether compound (C-2) having an OH value of 1190 to 1320 mgKOH/g.

As another example, the method of preparing the polyamide resin composition of the present invention includes a step of kneading and extruding 39 to 89.4 % by weight of a polyamide resin, 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 5 % by weight or less of additives (D).

For example, the kneading and extrusion may be performed using a single-screw extruder, a twin-screw extruder, or a Banbury mixer. In this case, the composition may be uniformly dispersed and thus excellent compatibility may be achieved.

For example, the kneading and extrusion may be performed at a barrel temperature of 200 to 300 °C, preferably 210 to 290 °C, more preferably 210 to 280 °C. In this case, throughput per unit time may be increased, and melt-kneading may be sufficiently performed. In addition, thermal decomposition of the resin component may be prevented.

For example, the kneading and extrusion may be performed at a screw rotation speed of 200 to 300 rpm, preferably 220 to 280 rpm, more preferably 230 to 270 rpm. Within this range, throughput per unit time may be increased, and process efficiency may be improved. In addition, excessive cutting may be prevented.

The polyamide resin composition obtained by the kneading and extrusion may preferably be provided in the form of pellets.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

One or more feeders may be provided. Optionally, two or more feeders may be provided. For example, a main feeder and optionally an auxiliary feeder may be provided. Optionally, more than two auxiliary feeders may be provided.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

## Molded article

For example, the molded article of the present invention includes the polyamide resin composition of the present invention. In this case, heat resistance may be superior compared to conventional polyamide resin compositions.

A method of manufacturing the molded article includes a step of injecting an extruded product manufactured by the method of preparing the polyamide resin composition. In this case, a molded article having rigidity, impact resistance, and heat resistance may be easily manufactured.

During injection, the injection temperature (cylinder temperature) is preferably 250 to 300 °C, more preferably 260 to 290 °C. Within this range, injection-molded products requiring complex designs may be easily manufactured.

During injection, the pressure may be preferably 20 to 90 bar, more preferably 40 to 80 bar. Within this range, injection-molded products requiring complex designs may be easily manufactured.

During injection, the holding pressure may be preferably 20 to 80 bar, more preferably 30 to 60 bar. Within this range, injection-molded products requiring complex designs may be easily manufactured.

The molded article may be a product requiring rigidity, impact resistance, and heat resistance.

The molded article may be an automotive part or an electrical and electronic part.

For example, the molded article may be an engine cover, under cover, intercooler, AIM, manifold of an automobile. In this case, by using the thermoplastic resin composition of the present invention, high quality exceeding the quality required by the market may be provided.

In describing the polyamide resin composition of the present invention, the method of preparing the same, and the molded article, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

The components used in the following Example and Comparative Example are as follows.

* A1) Polyamide: (amorphous: 50 to 60 % by weight, melting point (Tm): 259 to 261 °C, relative viscosity (RV): 2.4)
* A2) Polyamide (amorphous: 50 to 60 % by weight, melting point (Tm): 220 °C, relative viscosity (RV): 2.5)
* (B) Glass fiber: High-strength non-circular flat-type glass fiber including 52 to 56 % by weight of silica, 12 to 16 % by weight of alumina, 21 to 25 % by weight of calcium oxide and magnesia (magnesia: 1.5 % by weight or less), 1 % by weight or less of titanium dioxide, 5 to 8 % by weight of boron oxide, and less than 2.0 % by weight of a remainder including sodium oxide, potassium oxide, and iron oxide, having a tensile modulus of 83 to 87 GPa as measured by ASTM D2343 for 17 $\mu$m, 2400 text roving strands, and having an aspect ratio of 1:4 (L/D, D: 7 $\mu$m)
* (C-1) Ether compound: PTMG 3000 with a hydroxyl group of 37 mgKOH/g
* (C-2) Ether compound: Dipentaerythritol (DPE) having an OH value of 1190 to 1320 mgKOH/g
* (D) Additives

- Additive 1: Lubricant (Clariant Co., product name: LICOWAX-OP)
- Additive 2: Antioxidant (product name: KI, CuI)

Examples 1 and 2, and Comparative Examples 1 to 5

According to the contents shown in Table 1, the components shown in Table 1 were fed into a twin-screw extruder (SM Co., T40) and were melt-kneaded and extruded at a temperature of 250 °C and a rotation rate of 250 rpm under F/R of 60 kg/h to obtain pellets. Using the pellets, a test specimen was manufactured using an injection molding machine (Engel, 80 tons).

The twin-screw extruder has two or more inlets, and all ingredients were fed into the main inlet. The additives 1 and 2 were added at 0.3% by weight and 0.3% by weight, respectively, for a total of 0.6 % by weight.

[Test Examples]

The properties of the specimens manufactured in Examples 1 and 2 and Comparative Examples 1 to 5 were measured by the following methods, and the results are shown in Table 1 below.

* Specific gravity (g/cm$^3$): measured according to ISO 1183.
* Tensile strength (MPa): measured at a marking distance of 50 mm, a test speed of 5.0 mm/min, and a temperature of 23 °C according to ISO 527.

* Flexural modulus(MPa): measured at a span of 64 mm and a test speed of 2.0 mm/min according to ISO 178.
* Heat resistance tensile strength retention rate (%): The tensile strength of the specimens before and after aging at 200 °C for 1000 hours was measured according to ISO 527, and the heat resistance tensile strength retention rate was calculated using Equation 1 below.

Heat resistance tensile strength retention rate (%) = [Tensile strength after aging/Tensile strength before aging] $\times$ 100  [Equation 1]

* Color L value: Color L value was measured according to ISO 7724/1 for specimens after aging at 70 °C and 62 RH% for 4 weeks.

[Table 1]

| Classificati on | Example 1 | Example 2 | Comparative Example 1 | Comparative Example 2 | Comparative Example 3 | Comparative Example 4 | Comparative Example 5 |
|---|---|---|---|---|---|---|---|
| Polyamide | 61.4 | 60.4 | 62.4 | 61.9 | 59.4 | 61.1 | 49.4 |
| Glass fiber | 35.0 | 35.0 | 35.0 | 35.0 | 35.0 | 35.0 | 35.0 |
| PTMG3000 | 1.0 | 2.0 | 0 | 0.5 | 3.0 | 3.0 | 3.0 |
| DPE | 2.0 | 2.0 | 2.0 | 2.0 | 2.0 | 0.3 | 12.0 |
| Additives (1+ 2) | 0.6 | 0.6 | 0.6 | 0.6 | 0.6 | 0.6 | 0.6 |
| Specific gravity (g/cm$^3$) | 1.41 | 1.40 | 1.41 | 1.41 | 1.40 | 1.40 | 1.35 |
| Tensile strength (MPa) | 204 | 193 | 213 | 208 | 185 | 185 | 168 |
| Flexural modulus (MPa) | 9400 | 8900 | 10000 | 9800 | 8500 | 8500 | 7500 |
| Heat resistance tensile strength retention rate | 101.7 | 98.3 | 106.2 | 102.3 | 95.0 | 75.0 | 112.1 |
| L value | 32.6 | 29.0 | 64.2 | 43.7 | 28.8 | 25.5 | 66.2 |

As shown in Table 1, in the case of the polyamide resin compositions (Examples 1 and 2) according to the present invention, compared to the polyamide resin compositions (Comparative Examples 1 to 5) outside the range of the present invention, the evaluation items of specimen appearance according to tensile strength, flexural modulus, heat resistance tensile strength retention rate, and heat stability were excellent.

On the other hand, in the case of Comparative Example 1, in which the ether compound (C-1) was not used, the appearance of the specimen was poor due to poor heat stability compared to Example 1.

In addition, in the case of Comparative Example 2, in which a small amount of the ether compound (C-1) was used, the appearance of the specimen was significantly worse than that of Example 1 due to the deterioration of heat resistance, tensile strength retention rate, and heat stability.

In addition, in the case of Comparative Example 3, in which an excessive amount of the ether compound (C-1) was used, the specimen appearance according to flexural modulus, heat resistance tensile strength retention rate, and heat stability was significantly worse than that of Example 1.

In addition, in the case of Comparative Example 4, in which a small amount of the ether compound (C-2) was used, the specimen appearance according to tensile strength, heat resistance tensile strength retention rate, and heat stability was significantly worse than that of Example 1.

In addition, in the case of Comparative Example 5, in which an excess of ether compound (C-2) was used, the specific gravity and tensile strength of the specimen were significantly inferior to those of Example 1.

In conclusion, when the polyamide resin composition is prepared by mixing a polyamide resin, glass fiber, and ether compounds satisfying a specific OH value at a predetermined composition ratio, a molded article including the polyamide resin composition has excellent tensile strength, flexural modulus, and heat resistance and is hardly affected by heat due to exposure to external environments. Accordingly, the molded article may be suitable for automobile or electrical/electronic parts.

**Claims**

1. A polyamide resin composition comprising a polyamide resin (A), glass fiber (B), and an ether compound (C), wherein the ether compound (C) comprises an ether compound (C-1) having an OH value of 35 to 40 mgKOH/g; and an ether compound (C-2) having an OH value of 1190 to 1320 mgKOH/g.

2. A polyamide resin composition comprising 39 to 89.4 % by weight of a polyamide resin (A), 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 5 % by weight or less of additives (D).

3. The polyamide resin composition according to claim 1 or 2, wherein the ether compound (C-1) has a number average molecular weight of 2600 to 3200 g/mol, and the ether compound (C-2) has a number average molecular weight of 100 to 400 g/mol.

4. The polyamide resin composition according to claim 1 or 2, wherein the ether compound (C-1) and the ether compound (C-2) are comprised in a weight ratio (C-1:C-2) of 1:0.5 to 1:5.

5. The polyamide resin composition according to claim 1 or 2, wherein the glass fiber comprises 52 to 56 % by weight of silica, 12 to 16 % by weight of alumina, 21 to 25 % by weight of calcium oxide and magnesia (magnesia: 1.5 % by weight or less), 1 % by weight or less of titanium dioxide, 5 to 8 % by weight of boron oxide, and less than 2.0 % by weight of a remainder comprising sodium oxide, potassium oxide, and iron oxide.

6. The polyamide resin composition according to claim 2, wherein the additives comprise one or more selected from a lubricant, an antioxidant, a heat stabilizer, and a light stabilizer.

7. The polyamide resin composition according to claim 1 or 2, wherein the polyamide resin composition has a tensile strength of 170 MPa or more as measured at a marking distance of 50 mm, a test speed of 5.0 mm/min, and a temperature of 23 °C according to ISO 527 and a flexural modulus of 8800 MPa or more as measured at a span of 64 mm and a test speed of 2.0 mm/min according to ISO 178.

8. A method of preparing a polyamide resin composition, comprising kneading and extruding a polyamide resin (A), glass fiber (B), and an ether compound (C),
   wherein the ether compound (C) comprises an ether compound (C-1) having an OH value of 35 to 40 mgKOH/g; and an ether compound (C-2) having an OH value of 1190 to 1320 mgKOH/g.

9. A method of preparing a polyamide resin composition, comprising kneading and extruding 39 to 89.4 % by weight of a polyamide resin (A), 4.4 to 40 % by weight of glass fiber (B), 0.5 to 10 % by weight of an ether compound (C-1) having an OH value of 35 to 40 mgKOH/g, 0.1 to 10 % by weight of an ether compound (C-2) having an OH value of 1190 to 1320 mgKOH/g, and 0 to 5 % by weight of additives.

10. A molded article comprising the polyamide resin composition according to claim 1.

11. The molded article according to claim 10, wherein the molded article is an automotive part or an electrical and electronic part.

# INTERNATIONAL SEARCH REPORT

| | International application No. |
|---|---|
| | **PCT/KR2024/096662** |

| | |
|---|---|
| **A.** | **CLASSIFICATION OF SUBJECT MATTER** |

**C08L 77/00**(2006.01)i; **C08L 77/02**(2006.01)i; **C08L 77/06**(2006.01)i; **C08L 71/00**(2006.01)i; **C08K 7/14**(2006.01)i; **C08K 5/053**(2006.01)i

According to International Patent Classification (IPC) or to both national classification and IPC

| | |
|---|---|
| **B.** | **FIELDS SEARCHED** |

Minimum documentation searched (classification system followed by classification symbols)

C08L 77/00(2006.01); C08K 3/04(2006.01); C08K 5/053(2006.01); C08K 5/06(2006.01); C08K 7/14(2006.01); C08L 63/00(2006.01); C08L 71/02(2006.01); C08L 77/02(2006.01); C08L 77/06(2006.01); F41H 5/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리아마이드(polyamide), 유리섬유(glass fiber), 에테르 화합물(ether compound), 폴리테트라메틸렌 에테르 글리콜(Polytetramethylene ether glycol, PTMG), 디펜타에리트리톨(Dipentaerythritol, DPE)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2021-0059407 A (LG CHEM, LTD.) 25 May 2021 (2021-05-25)<br>See claims 1-11; paragraphs [0018]-[0047]; example 1; and table 1. | 1-11 |
| Y | CN 114525031 B (ZHEJIANG SHINY NEW MATERIAL CO., LTD.) 21 November 2023 (2023-11-21)<br>See claims 1-7; paragraphs [0018] and [0039]-[0043]; and tables 1 and 2. | 1-11 |
| Y | US 9056786 B2 (PETERS, J. C. et al.) 16 June 2015 (2015-06-16)<br>See claims 11 and 15. | 5 |
| A | US 2013-0228728 A1 (MATHUR, S. et al.) 05 September 2013 (2013-09-05)<br>See claims 1-26. | 1-11 |
| A | KR 10-2017-0023133 A (UBE INDUSTRIES, LTD.) 02 March 2017 (2017-03-02)<br>See claims 1-16. | 1-11 |

| ✓ Further documents are listed in the continuation of Box C. | ✓ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 March 2025** | **17 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/096662** |

**C.    DOCUMENTS CONSIDERED TO BE RELEVANT**

| Category* | Citation of document, with indication, where appropriate, of the relevant passages | Relevant to claim No. |
|---|---|---|
| A | US 2023-0365807 A1 (KINGFA SCI. & TECH. CO., LTD.) 16 November 2023 (2023-11-16)<br>See claim 1. | 1-11 |

## INTERNATIONAL SEARCH REPORT
### Information on patent family members

International application No.

**PCT/KR2024/096662**

| Patent document cited in search report | | | Publication date (day/month/year) | Patent family member(s) | | | Publication date (day/month/year) |
|---|---|---|---|---|---|---|---|
| KR | 10-2021-0059407 | A | 25 May 2021 | None | | | |
| CN | 114525031 | B | 21 November 2023 | CN | 114525031 | A | 24 May 2022 |
| US | 9056786 | B2 | 16 June 2015 | AU | 2007-333472 | A1 | 19 June 2008 |
| | | | | AU | 2007-333472 | B2 | 04 August 2011 |
| | | | | BR | PI0720311 | A2 | 04 December 2018 |
| | | | | CA | 2672222 | A1 | 19 June 2008 |
| | | | | CA | 2672222 | C | 18 December 2012 |
| | | | | CA | 2811273 | A1 | 22 March 2012 |
| | | | | CA | 2811360 | A1 | 14 March 2013 |
| | | | | CN | 101558019 | A | 14 October 2009 |
| | | | | CN | 101558019 | B | 11 January 2012 |
| | | | | CN | 102531401 | A | 04 July 2012 |
| | | | | CN | 102531401 | B | 22 August 2017 |
| | | | | CN | 103153894 | A | 12 June 2013 |
| | | | | CN | 103153895 | A | 12 June 2013 |
| | | | | CN | 103153896 | A | 12 June 2013 |
| | | | | EP | 2114837 | A1 | 11 November 2009 |
| | | | | EP | 2616399 | A1 | 24 July 2013 |
| | | | | EP | 2616400 | A1 | 24 July 2013 |
| | | | | EP | 2753589 | A1 | 16 July 2014 |
| | | | | HK | 1132986 | A1 | 12 March 2010 |
| | | | | IL | 199060 | A | 27 June 2013 |
| | | | | JP | 2010-513187 | A | 30 April 2010 |
| | | | | JP | 2013-151416 | A | 08 August 2013 |
| | | | | JP | 2013-542904 | A | 28 November 2013 |
| | | | | JP | 2014-530162 | A | 17 November 2014 |
| | | | | JP | 2017-001950 | A | 05 January 2017 |
| | | | | JP | 5260544 | B2 | 14 August 2013 |
| | | | | JP | 5823425 | B2 | 25 November 2015 |
| | | | | JP | 6352186 | B2 | 04 July 2018 |
| | | | | KR | 10-1123526 | B1 | 12 March 2012 |
| | | | | KR | 10-2009-0091806 | A | 28 August 2009 |
| | | | | KR | 10-2013-0100312 | A | 10 September 2013 |
| | | | | KR | 10-2014-0005876 | A | 15 January 2014 |
| | | | | KR | 10-2014-0074246 | A | 17 June 2014 |
| | | | | MX | 2009006198 | A | 22 June 2009 |
| | | | | MX | 2013002774 | A | 28 May 2013 |
| | | | | MX | 2013002775 | A | 28 October 2013 |
| | | | | MX | 2013002777 | A | 28 October 2013 |
| | | | | RU | 2009126780 | A | 20 January 2011 |
| | | | | RU | 2013116989 | A | 20 October 2014 |
| | | | | RU | 2013116990 | A | 20 October 2014 |
| | | | | RU | 2478585 | C2 | 10 April 2013 |
| | | | | SG | 177209 | A1 | 30 January 2012 |
| | | | | TW | 200837034 | A | 16 September 2008 |
| | | | | TW | 201217295 | A | 01 May 2012 |
| | | | | TW | 201223904 | A | 16 June 2012 |
| | | | | TW | 201224018 | A | 16 June 2012 |
| | | | | TW | 201307231 | A | 16 February 2013 |
| | | | | TW | 201317193 | A | 01 May 2013 |

Form PCT/ISA/210 (patent family annex) (July 2022)

## INTERNATIONAL SEARCH REPORT
### Information on patent family members

International application No.

**PCT/KR2024/096662**

| Patent document cited in search report | | | Publication date (day/month/year) | Patent family member(s) | | | Publication date (day/month/year) |
|---|---|---|---|---|---|---|---|
| | | | | TW | 201811698 | A | 01 April 2018 |
| | | | | TW | I406831 | B | 01 September 2013 |
| | | | | TW | I408118 | B | 11 September 2013 |
| | | | | TW | I606988 | B | 01 December 2017 |
| | | | | TW | I662002 | B | 11 June 2019 |
| | | | | US | 10647610 | B2 | 12 May 2020 |
| | | | | US | 2008-0146430 | A1 | 19 June 2008 |
| | | | | US | 2011-0053755 | A1 | 03 March 2011 |
| | | | | US | 2012-0058878 | A1 | 08 March 2012 |
| | | | | US | 2012-0060678 | A1 | 15 March 2012 |
| | | | | US | 2012-0060679 | A1 | 15 March 2012 |
| | | | | US | 2012-0064788 | A1 | 15 March 2012 |
| | | | | US | 2014-0235424 | A1 | 21 August 2014 |
| | | | | US | 2016-0185655 | A1 | 30 June 2016 |
| | | | | US | 2016-0264453 | A1 | 15 September 2016 |
| | | | | US | 7829490 | B2 | 09 November 2010 |
| | | | | US | 8697590 | B2 | 15 April 2014 |
| | | | | US | 8697591 | B2 | 15 April 2014 |
| | | | | US | 9096462 | B2 | 04 August 2015 |
| | | | | US | 9156728 | B2 | 13 October 2015 |
| | | | | US | 9394196 | B2 | 19 July 2016 |
| | | | | US | 9598309 | B2 | 21 March 2017 |
| | | | | WO | 2008-073585 | A1 | 19 June 2008 |
| | | | | WO | 2012-037205 | A1 | 22 March 2012 |
| | | | | WO | 2012-037214 | A1 | 22 March 2012 |
| | | | | WO | 2012-037219 | A1 | 22 March 2012 |
| | | | | WO | 2013-036505 | A1 | 14 March 2013 |
| | | | | ZA | 200903698 | B | 24 November 2010 |
| US | 2013-0228728 | A1 | 05 September 2013 | CN | 103890097 | A | 25 June 2014 |
| | | | | CN | 103890097 | B | 09 June 2017 |
| | | | | EP | 2742097 | A2 | 18 June 2014 |
| | | | | JP | 2014-525506 | A | 29 September 2014 |
| | | | | KR | 10-2014-0054365 | A | 08 May 2014 |
| | | | | US | 9856365 | B2 | 02 January 2018 |
| | | | | WO | 2013-033287 | A2 | 07 March 2013 |
| | | | | WO | 2013-033287 | A3 | 27 June 2013 |
| KR | 10-2017-0023133 | A | 02 March 2017 | CN | 106661324 | A | 10 May 2017 |
| | | | | CN | 106661324 | B | 02 August 2019 |
| | | | | EP | 3162855 | A1 | 03 May 2017 |
| | | | | JP | 6589864 | B2 | 16 October 2019 |
| | | | | US | 10059842 | B2 | 28 August 2018 |
| | | | | US | 2017-0137622 | A1 | 18 May 2017 |
| | | | | WO | 2016-002682 | A1 | 07 January 2016 |
| US | 2023-0365807 | A1 | 16 November 2023 | CN | 111930852 | A | 13 November 2020 |
| | | | | CN | 111930852 | B | 25 March 2022 |
| | | | | CN | 112194894 | A | 08 January 2021 |
| | | | | CN | 112194894 | B | 10 May 2022 |
| | | | | EP | 3846112 | A2 | 07 July 2021 |
| | | | | EP | 3846112 | A3 | 22 September 2021 |
| | | | | EP | 4223842 | A1 | 09 August 2023 |

Form PCT/ISA/210 (patent family annex) (July 2022)

**INTERNATIONAL SEARCH REPORT**
Information on patent family members

International application No.

**PCT/KR2024/096662**

| Patent document cited in search report | Publication date (day/month/year) | Patent family member(s) | | Publication date (day/month/year) |
|---|---|---|---|---|
| | | JP | 2021-103572 A | 15 July 2021 |
| | | JP | 2023-543072 A | 12 October 2023 |
| | | JP | 7238006 B2 | 13 March 2023 |
| | | JP | 7557059 B2 | 26 September 2024 |
| | | KR | 10-2611812 B1 | 07 December 2023 |
| | | US | 2021-0209091 A1 | 08 July 2021 |
| | | WO | 2022-068138 A1 | 07 April 2022 |

Form PCT/ISA/210 (patent family annex) (July 2022)

**EP 4 667 532 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240058654

- JP 2014148560 A